# EUROPÄISCHE PATENTSCHRIFT

(11) **EP 4 180 331 B1**
(45) Veröffentlichungstag und Bekanntmachung des Hinweises auf die Patenterteilung: **21.01.2026**
(21) Anmeldenummer: 22206922.1
(22) Anmeldetag: 11.11.2022
(51) Int. Cl.: B64D 17/80, B64C 27/00, B64D 17/40, B64U 10/10, B64U 10/17, B64U 30/20, B64U 70/83, B64D 25/12

(54) **RETTUNGSSYSTEM FÜR EIN FLUGGERÄT**
RESCUE SYSTEM FOR AN AIRCRAFT
SYSTÈME DE SAUVETAGE POUR UN AÉRONEF

(30) Priorität: 12.11.2021 DE 102021129574
(43) Veröffentlichungstag der Anmeldung: 17.05.2023
(73) Patentinhaber: ESG Elektroniksystem- und Logistik-GmbH, 82256 Fürstenfeldbruck (DE)
(72) Erfinder: Hanrieder, Andreas, 86899 Landsberg am Lech (DE); Nieberle, Timo, 86871 Rammingen (DE)
(74) Vertreter: Betten & Resch

(56) Entgegenhaltungen:
- DE-A1- 3 617 294
- GB-A- 157 472
- GB-A- 2 014 095
- GB-A- 2 231 010
- JP-A- 2021 091 258
- US-A- 4 648 568
- US-A- 5 836 544
- US-B1- 6 199 799

## Beschreibung

### TECHNISCHES GEBIET

Rettungssystem für ein Fluggerät basierend auf einem Fallschirm.

### HINTERGRUND

Im Stand der Technik sind Rettungssysteme für Fluggeräte basierend auf einem Fallschirm bekannt. Fluggeräte können insbesondere unbemannte Fluggeräte oder Drohnen sein. Besondere Anforderung stellen sich, wenn es sich bei der Drohne um ein Fluggerät in der Kategorie der Drehflügler handelt. Bei Rettungssystemen für Drehflügler ist insbesondere zu vermeiden, dass der Fallschirm und/oder dessen Leinen während oder nach dem Auswurf des Fallschirms in einer Notfallsituation mit einem Rotor oder anderen bewegten Komponenten des Drehflüglers derart in Kontakt kommen, dass das Rettungssystem beschädigt wird und/oder seine Funktion insgesamt negativ beeinträchtigt ist. In konventionellen Rettungssystemen, wird, zum Beispiel, ein Rettungsschirm durch einen pyrotechnischen Treibsatz möglich kräftig vom Drehflügler abgestoßen. Dadurch kann sich der Rettungsschirm in sicherer Entfernung vom Drehflügler entfalten und die Wahrscheinlichkeit einer unbeabsichtigten Kollision des Rettungsschirms und seiner Leinen mit dem Rotor kann reduziert werden. Bei solchen Rettungssystemen besteht das Problem, dass der pyrotechnische Treibsatz ein Gefahrengut darstellt, das bei der Konstruktion, der Zulassung und beim Betrieb des Fluggeräts besondere Vorsichtsmaßnahmen erfordert. Eine nachträgliche Ergänzung eines Fluggeräts mit einem auf einem pyrotechnischen Treibsatz basierenden Rettungssystem ist somit nicht unproblematisch.

JP 2021 091258 A offenbart eine Technologie, die einen Fallschirm im Falle eines Sturzes einer Flugvorrichtung zuverlässig öffnen kann.

US 5 836 544 A offenbart ein System für eine sanfte Notlandung zur Verwendung in einem Rotorflugzeug, derart wie ein Hubschrauber. Das System beinhaltet mindestens eine einen Fallschirm enthaltende Struktur, die mindestens einen Fallschirm aufnimmt.

US 4 648 568 A offenbart einen Bremsschirm, der im Falle einer Fehlfunktion des Heckrotors am hinteren Teil des Hubschraubers geöffnet wird.

GB 2 231 010 A offenbart eine Fallschirmöffnungshülle, die Mittel zum Festziehen der Hülle um eine Kappe enthält, um dadurch ein Durchsacken der Kappe innerhalb der Hülle während der anfänglichen Öffnung zu vermindern.

GB 2 014 095 A offenbart eine Vorrichtung zum Einbringen eines gepackten Fallschirms in einen Behälter.

### ZUSAMMENFASSUNG

Die Erfindung wird durch den unabhängigen Anspruch definiert. Die abhängigen Ansprüche spezifizieren Ausführungsformen davon.

Im Folgenden wird eine vereinfachte Zusammenfassung einiger Ausführungsformen der Offenbarung gegeben, um ein grundlegendes Verständnis für diese Ausführungsformen und ihre Vorteile zu vermitteln. Weitere Ausführungsformen und technische Details sind in der nachfolgenden detaillierten Beschreibung enthalten.

Der vorliegenden Erfindung liegt die Aufgabe zugrunde, ein Rettungssystem vorzusehen, welches ein Fluggerät vor einem unkontrollierten Absturz bewahrt und gleichzeitig eine zuverlässige Auslösung des Rettungssystems sicherstellt, ohne dabei durch das Fluggerät beschädigt zu werden. Eine weitere Aufgabe besteht darin, dass ein Rettungssystem bereitgestellt wird, welches derart ausgestaltet ist, dass die Flugeigenschaften des Fluggerätes bei einem nachträglichen Einbau eines derartigen Rettungssystems so wenig wie möglich beeinträchtigt werden.

Erfindungsgemäß wird diese Aufgabe durch eine Vorrichtung nach Anspruch 1. Weitere Ausgestaltungen der Erfindung ergeben sich aus den jeweiligen Unteransprüchen.

Das erfindungsgemäße Rettungssystem für ein Fluggerät, das ein Drehflügler ist, umfasst hierbei einen Hauptschirm mit einer Hauptleine und einer Mehrzahl von Hauptschirmleinen, wobei die Hauptleine dazu ausgelegt ist, den Hauptschirm mit dem Fluggerät zu verbinden, an dem das Rettungssystem installiert ist. Das System weist ferner einen äußeren Container mit einem ersten Durchmesser auf, der dazu ausgelegt ist, an einer Außenseite des Fluggerätes längs entlang eines Heckauslegers des Drehflüglers angeordnet zu sein, sowie einen inneren Container, der in dem äußeren Container entfernbar angeordnet ist und geeignet ist, den Hauptschirm aufzunehmen. Der innere Container ist aus leichtem, gleitfähigem Textilstoff gefertigt.

Vorzugsweise weist der innere Container einen Reffbereich mit einem zweiten Durchmesser auf, wobei mittels einer Mehrzahl von Schlaufen-Ösen-Paaren der zweite Durchmesser des Reffbereichs im Wesentlichen auf einen Durchmesser gerefft wird, der kleiner ist als der erste Durchmesser des äußeren Containers, wenn sich der Hauptschirm innerhalb des inneren Containers befindet, wobei eine Auslöseleine die Schlaufen in den Ösen fixiert und dadurch eine Reffung des inneren Containers aufrechterhält und einen Leinenbereich, wobei der Leinenbereich an einem ersten Ende des Reffbereichs angeordnet ist und geeignet ist die Mehrzahl der Hauptschirmleinen aufzunehmen. Ferner ist ein Kompressionsbereich vorgesehen, der einen Durchmesser aufweist, wobei der dritte Durchmesser geringer ist als der zweite Durchmesser und im Wesentlichen dem gerefften Durchmesser des Reffbereichs entspricht. Der Kompressionsbereich kann hierbei vorzugsweise an einem zweiten Ende des Reffbereichs angeordnet sein. Ferner kann das Rettungssystem eine Vorrichtung zum Anbringen eines Hilfsschirms aufweisen, wobei der Kompressionsbereich vorzugsweise zwischen der Vorrichtung zum Anbringen des Hilfsschirms und dem Reffbereich angeordnet werden kann.

Vorteilhafterweise kann der äußere Container hierbei eine rohrförmige Struktur aufweisen und der innere Container eine schlauchform, sodass eine sichere Anordnung des inneren Containers im äußeren Container sichergestellt werden kann. Eine derartige Anordnung des inneren Containers in dem äußeren Container, wie oben beschrieben, hat außerdem den Vorteil, dass der innere Schlauch zuverlässig aus dem äußeren Container befördert und geöffnet werden kann, ohne dabei eine Beschädigung des Rettungsschirms bei der Auslösung oder Öffnung durch Teile des Fluggerätes zu riskieren.

In einer bevorzugten Ausführungsform weist das Rettungssystem einen Hilfsschirm auf, der mittels der Vorrichtung zum Anbringen des Hilfsschirms mit dem inneren Container verbunden ist und somit für eine schnelle Entfaltung des Rettungsschirms sorgen kann.

In einer weiteren Ausführungsform kann die Hauptleine mit der Auslöseleine derart verbunden sein, dass die Auslöseleine erst aus den Schlaufen-Ösen-Paaren gezogen wird, wenn der innere Container durch den Hilfsschirm vollständig aus dem äußeren Container gezogen wurde. Diese Art der Auslösung des Rettungsschirms ist vorteilhaft, indem der Schirm so lange gerefft ist und dadurch leicht aus dem äußeren Container gezogen werden kann, bis der innere Container völlig frei von dem äußeren Container und entfernt von dem Fluggerät ist bevor der Rettungsschirm ausgelöst wird.

Der Hilfsschirm des Rettungssystems kann ferner vorteilhafterweise rein mechanisch, d.h. ohne Verwendung von Pyrotechnik, ausgeschossen werden. Rein mechanische Ausschussmechanismen basieren zum Beispiel auf Federkraft oder Druckluft. Rettungssysteme, welche einen Treibsatz, beispielsweise einen Raketenantrieb verwenden, um sicherzustellen, dass der Rettungsschirm weit genug von dem Fluggerät entfernt ist, bevor dieser ausgelöst wird, haben den Nachteil, dass zwar eine Beschädigung des Rettungsschirms durch das Fluggerät vermieden wird, was allerdings mit der Gefahr einer Beschädigung des Rettungsschirms durch den Treibsatz selbst einhergeht.

In einer weiteren Ausführungsform kann das erfindungsgemäße Rettungssystem ein Notfalldetektionsmodul aufweisen. Ein derartiges Modul ermöglicht eine genaue Überwachung der Avionik des Fluggerätes, sowie eine kritische Analyse der ermittelten Flugdaten, wodurch eine Erstellung verschiedener Notfallszenarien ermöglicht wird, um das Risiko einer Fehlauslösung des Rettungssystems zu minimieren.

Vorzugsweise kann der Leinenbereich des inneren Containers eine Mehrzahl von Taschen aufweisen, die geeignet sind, die Hauptschirmleinen aufzunehmen. Durch eine derartige Anordnung kann ein sicheres Verstauen der Hauptschirmleinen erreicht werden, was wiederum ein zuverlässiges Öffnen des Rettungsschirms gewährleistet.

In einem bevorzugten Ausführungsbeispiel kann der äußere Container eine Schutzkappe aufweisen, welche in einem detektierten Notfall durch das Notfalldetektionsmodul rein mechanisch, zum Beispiel mittels eines Federmechanismus, von dem äußeren Container abgesprengt wird. Alternativ kann die Schutzkappe derart beschaffen sein, dass sie beim Auslösen des Hilfsschirms durch den Druck des Hilfsschirms zerstört wird oder berstet. Solche Schutzkappen sind typischerweise aus Berstfolie gefertigt. Hierdurch kann das Risiko einer Beschädigung des Schirms oder des Fluggerätes durch die Schutzkappe verhindert werden, und gleichzeitig ein sicheres Verstauen des inneren Containers innerhalb des äußeren Containers erreicht werden, wobei das Fluggerät vorzugsweise ein Drehflügler sein kann und der äußere Container hierbei längs entlang eines Heckauslegers des Drehflüglers angeordnet ist.

In einer bevorzugten Ausführungsform des besagten Drehflüglers kann die Hauptleine mittels eines Verbindungssystems mit einer Rotorachse des Drehflüglers verbunden sein, so dass in einem aufgefalteten Zustand des Hauptschirms, die Hauptleine des Hauptschirms im Wesentlichen in der Nähe des Schwerpunktes des Drehflüglers drehbar befestigt ist, wodurch eine horizontale Lage des Drehflüglers im ausgelösten Zustand des Rettungsschirms erreicht werden kann und dadurch das Risiko einer Beschädigung des Rotors oder anderer Teile des Drehflüglers reduziert werden kann.

### BESCHREIBUNG DER ZEICHNUNGEN

Die vorhergehende Zusammenfassung sowie die folgende detaillierte Beschreibung bevorzugter Ausführungsformen sind leichter zu verstehen, wenn sie in Verbindung mit den beigefügten Zeichnungen gelesen werden. Zur Veranschaulichung der Erfindung zeigen die Zeichnungen beispielhafte Details der beschriebenen Ausführungsformen. Die in den Zeichnungen dargestellten Informationen sind nur beispielhaft und erläuternd und schränken die beanspruchte Erfindung nicht ein.

Die vorliegende Erfindung wird nachfolgend im Detail unter Bezugnahme auf die beigefügten Zeichnungen beschrieben:
Fig. 1 zeigt eine Skizze, die einen Überblick über das Rettungssystem einschließlich eines Fluggeräts gibt.
Fig. 2 zeigt einen schematischen Aufbau des Rettungssystems.
Fig. 3 zeigt einen inneren Container für den Hauptschirm in gepacktem Zustand.
Fig. 4 zeigt Details des inneren Containers für den Hauptschirm in gepacktem Zustand.
Fig. 5 zeigt Details des inneren Containers für den Hauptschirm in ungepacktem Zustand.
Fig. 6A zeigt Details des Reffbereichs des inneren Containers für den Hauptschirm in ungepacktem Zustand mit gelösten Ösen und Schlaufen.
Fig. 6B zeigt Details des Reffbereichs des inneren Containers für den Hauptschirm in gepacktem Zustand mit geschlossenen Ösen und Schlaufen.

### DETAILLIERTE BESCHREIBUNG

Die vorliegende Erfindung bezieht sich auf ein Rettungssystem für ein Fluggerät, sowie auf ein Behältnis zur Aufnahme eines Fallschirms.

Fluggeräte in diesem Zusammenhang sind bemannte oder unbemannte Drohnen, zum Beispiel Drehflügler-Drohnen vom Typ Multi-Rotor oder Single-Rotor Helikopter. Andere Fluggeräte, für die das erfindungsgemäße Rettungssystem geeignet ist, sind zum Beispiel Fixed-Wing Drohnen. Experimente mit dem erfindungsgemäßen Rettungssystem fanden zum Beispiel mit einer Single-Rotor Helikopter Drohne mit einem maximalen Startgewicht von 150 kg und einer Höchstgeschwindigkeit von 140 km/h statt. Die Erfindung ist jedoch nicht auf die Anwendung für diese spezielle Drohne beschränkt.

Das erfindungsgemäße Rettungssystem basiert auf dem Öffnen eines Fallschirms und der, nach Entfaltung des Schirms in einer Notsituation, resultierenden Reduzierung der Fallgeschwindigkeit der Drohne. Hierdurch wird, nach Eintritt eines Notfalls, eine relativ sanfte Landung des Fluggeräts ermöglicht.

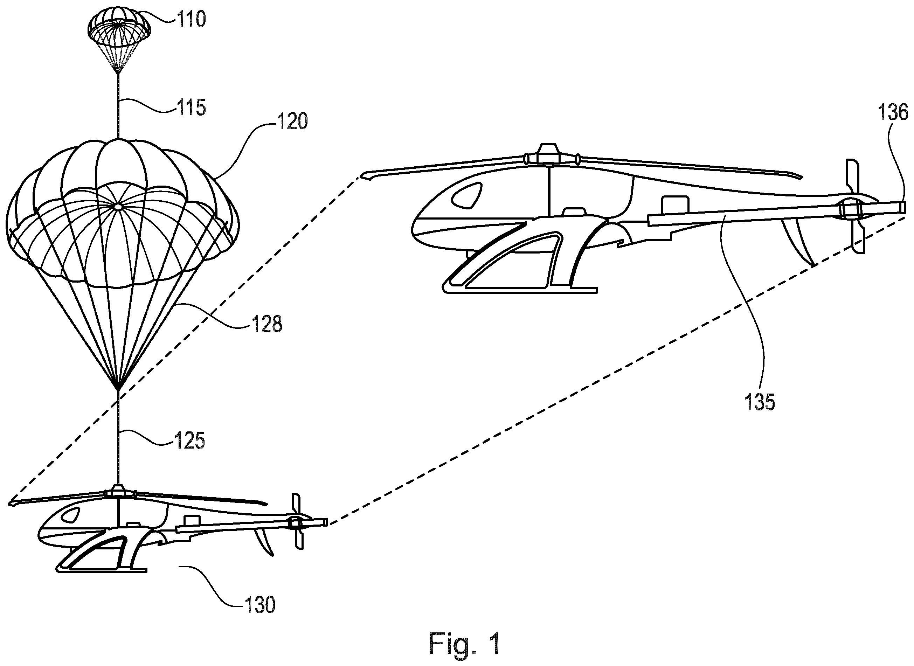

Fig. 1 zeigt einen Überblick über das Rettungssystem einschließlich eines Fluggeräts.

Im linken Teil von Fig. 1 ist das Fluggerät als Single-Rotor Helikopter Drohne 130 gezeigt mit entfalteten Hauptschirm 120 und Hilfsschirm 110, genannt "Pilot Chute" oder Pilotschirm. Der Hilfsschirm 110 ist kleiner als der Hauptschirm120. Der Hauptschirm 120 ist über eine Hauptleine 125 und über mehrere Fangleinen, beziehungsweise Hauptschirmleinen 128 mit dem Fluggerät verbunden. Der Hilfsschirm 110 ist mit einer Hilfsschirmleine 115 mit dem Hauptschirm 120 und der Hauptschirmleine 125 verbunden.

Im rechten Teil von Fig. 1 sind Details der Lage des Rettungssystems am Beispiel der Single-Rotor Helikopter Drohne 130 gezeigt. Das Rettungssystem umfasst eine länglichen rohrförmigen äußeren Container 135, der entlang eines Heckauslegers der Helikopter Drohne 130 angeordnet und montiert ist. Dieser äußere Container 135 beinhaltet, unter anderem, einen inneren Container und den Hauptschirm 120 im gefalteten Zustand (nicht in Fig. 1 gezeigt). Die Anordnung des Rettungssystems längs entlang des Heckauslegers der Helikopter Drohne ist aerodynamisch und auch in Bezug auf die Gewichtsverteilung vorteilhaft. Diese konstruktive Eigenschaft des Rettungssystems, das diese Anordnung ermöglicht, macht das System insbesondere zur Nachrüstung bei Drohnen attraktiv. Der äußere Container 135 ist am Heck durch eine schützende Abdeckung 136, geschlossen, die ein Eindringen von Verschmutzung und Feuchtigkeit im Normalbetrieb der Drohne, d.h. nicht im Notfallbetrieb, verhindert. Die Abdeckung 136 kann eine Abdeckkappe sein oder auch eine Folie, zum Beispiel eine Berstfolie.

Beim Auslösen des Rettungssystems, wird diese Abdeckung 136 entfernt. Hierbei wird der Hilfsschirm 110, der innere Container und der darin enthaltene Hauptschirm 120 ausgestoßen und entfaltet. Details dieses Prozesses werden im Folgenden beschrieben.

Optional ragt der, in der in Fig. 1 gezeigten Anordnung, hintere Abschnitt des rohrförmigen äußeren Containers 135 bis oder über einen Radius des Heckrotors hinaus. Dies hat den Vorteil, dass die Wahrscheinlichkeit, dass einzelne Komponenten des Rettungssystems beim Auslösen mit dem Heckrotor kollidieren und/oder deren Funktion durch den Heckrotor beeinträchtigt wird, reduziert wird.

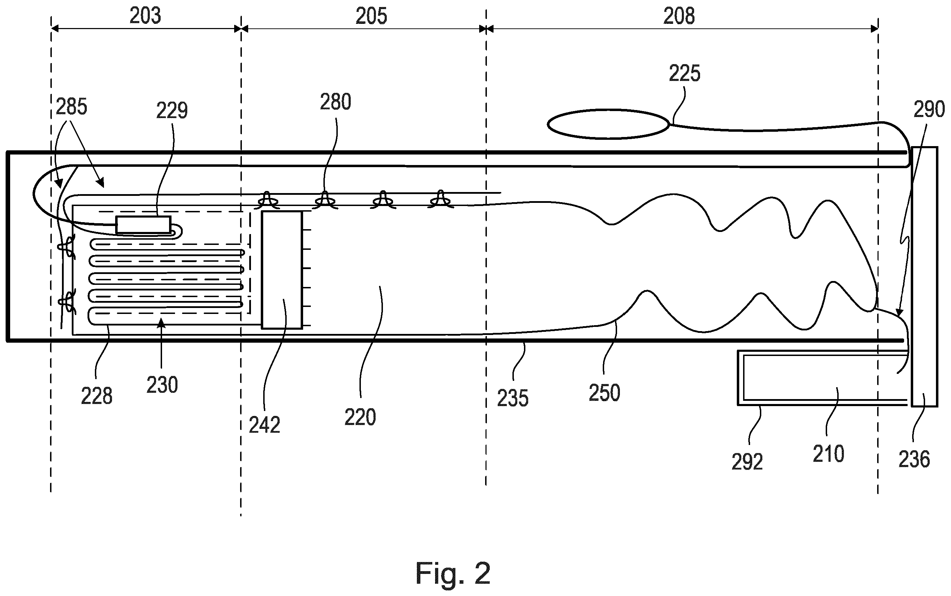

Fig. 2 zeigt einen schematischen Aufbau des Rettungssystems und dessen Details in nicht ausgelöstem Zustand.

Das Rettungssystem umfasst einen äußeren Container 235 mit einem ersten Durchmesser, der an einer Außenseite des Fluggerätes 130 angeordnet ist. Dieser äußere Container 235 dient als Schutzvorrichtung für die im Folgenden beschriebenen weiteren Komponenten des Rettungssystems. Die längliche Bauform des äußeren Containers, ist, wie zuvor beschrieben, vorteilhaft und bedingt durch Aerodynamik und die Gewichtsverteilung im Flugbetrieb des Fluggerätes 130. Die längliche Bauform des äußeren Containers 235 und damit des Rettungssystems insgesamt ist jedoch nicht unproblematisch in Bezug auf die Anforderung, dass der Auslösevorgang und damit verbunden die Entfaltung des Hauptschirms 220 sehr schnell und zuverlässig stattfinden müssen.

Der äußere Container 235 ist vorzugsweise aus einem leichten und widerstandsfähigen Material gefertigt, zum Beispiel einer Aluminiumlegierung oder Carbon. Der Durchmesser des äußeren Containers hängt von der Größe des Fallschirms ab. Die Größe des Fallschirms hängt wiederum vom Startgewicht der Drohne ab. Erfahrungsgemäß ist ein Durchmesser bei einem Rettungssystem für Drohnen mit maximalem Startgewicht von 150 Kilo zwischen 5 und 15 cm für den äußeren Container vorteilhaft.

Das Rettungssystem umfasst ferner einen inneren Container 250, der in einem nicht-ausgelösten Zustand, in dem äußeren Container 235 angeordnet ist und geeignet ist, den Hauptschirm 120 aufzunehmen.

Das Rettungssystem umfasst ferner einen Hauptschirm 220 mit einer Hauptleine 225 und einer Mehrzahl von Fangleinen 228, hierin auch Hauptschirmleinen genannt, wobei die Hauptleine 225 den Hauptschirm 220 mit dem Fluggerät 130 verbindet, an dem das Rettungssystem installiert ist.

Die Hauptleine 225 verfügt an dem am Fluggerät installieren Ende über eine Schlaufe, die als Schlaufenkupplung um die Achse eines Rotorkopfes gelegt wird, konkret die Achse des zentralen Rotors des Fluggeräts 130. Eine Aufhängung des Fluggeräts am Rotorkopf durch Schlaufenkupplungsprinzip hat den Vorteil, dass das Fluggerät kontrolliert auf dem Fahrwerk landen kann, was die Energie des Landestoßes gut absorbieren kann. Alternativ kann das Rettungssystem aber auch ohne Schlaufenkupplung benutzt werden, indem das Fluggerät 130 am Heck aufgehängt zu Boden gleitet.

Optional ist der vom Hauptschirm 220 entfernte Abschnitt der Hauptleine 225 innerhalb des Fluggeräts 130, wie beschrieben, geführt und als Schlaufenkupplung um die Rotorachse gelegt. Beim Auslösen des Rettungssystems kommt die Hauptleine 225 unter Zug und löst Sollbruchstellen am Rumpf des Fluggeräts 130, so dass das Fluggerät 130 in vollständig gespanntem Zustand der Hauptleine 125, wie im linken Teil der Fig. 1 gezeigt, und bei vollständig entfaltetem Hauptschirm 120 vertikal unter dem Hauptschirm 120 hängt.

Vorzugsweise ist zwischen Hauptleine 225 und Hauptschirmleinen 228 eine drehbare Kupplung, genannt Wirbel 229, installiert. Diese Kupplung entkoppelt die Drehung des Rotors des Fluggeräts 130 vom Hauptschirm 220. Mit anderen Worten führt, aufgrund des Wirbels 229, eine Drehung des Rotors nicht zu einer Drehung der Hauptschirmleinen 228 und des Hauptschirms 220.

Fig. 2 zeigt ferner einen optionalen Öffnungsverzögerer 242, einen sogenannten Slider 242, der eine Entfaltung des Hauptschirms 220, insbesondere bei hoher Geschwindigkeit des Fluggerätes, verzögert und eine kontrollierte Entfaltung des Hauptschirms 220 ermöglicht.

Fig. 2. zeigt, dass die Hauptschirmleinen 228 vorzugsweise in Leinentaschen 230 verstaut sind. Diese Packart der Hauptschirmleinen 228 ermöglicht ein rasches Entfalten der Leinen nach dem Auslösen des Rettungssystems und verhindert gleichzeitig ein Verheddern. Der innere Container 250 wird im Folgenden im Detail beschrieben.

Der innere Container 250 ist ein Behältnis zur Aufnahme des Hauptschirms 220. Der innere Container 250 ist vorzugsweise schlauchförmig und zumindest an einem Ende, an dem der Hauptschirm 220 in das Behältnis eingeführt wird, geöffnet.

Der innere Container ist aus leichtem, gleitfähigem Textilstoff gefertigt, zum Beispiel Ballonseide.

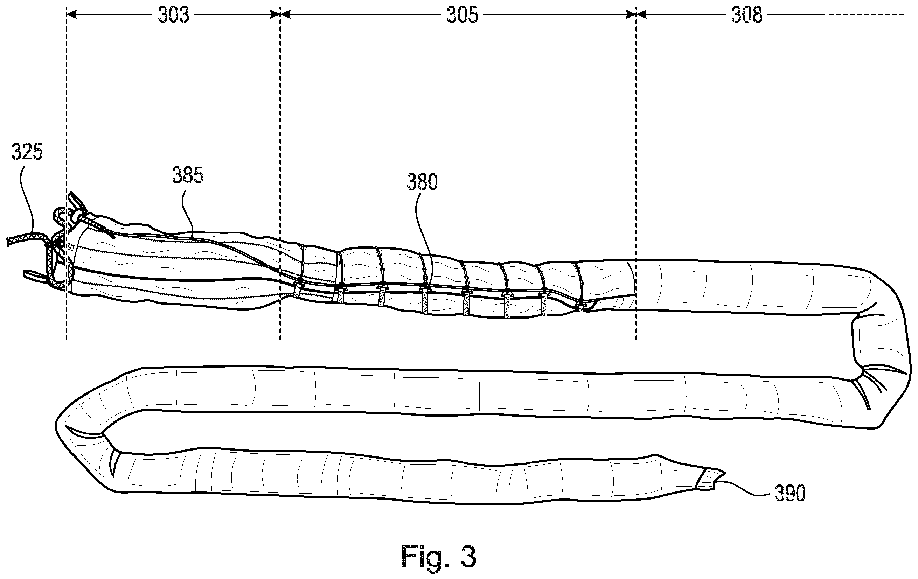

Der innere Container 250 ist, in nicht-ausgelöstem Zustand, im Inneren des äußeren Containers 235 gelagert. Der innere Container 250 ist derart beschaffen, dass er beim Auslösen der Rettungsvorrichtung sehr rasch und leicht aus dem äußeren Container 235 an dem Ende der gelösten Abdeckung 236 entweichen kann. Mit dem inneren Container 250 kann auch der darin enthaltene Hauptschirm aus dem äußeren Container 235 entweichen. Der Durchmesser des inneren Containers 250 ist in gepacktem Zustand, d.h. mit darin enthaltenem Hauptschirm, durchgehend, d.h. über die gesamte Länge, geringer als der Innendurchmesser des äußeren Containers 235. Diese Bauform stellt sicher, dass der innere Container im gepackten Zustand leicht beweglich im äußeren Container 235 gelagert ist und nicht erst nach Verformung in den äußeren Container 235 verbracht wird. Mit anderen Worten wird der innere Container nicht in den äußeren Container "hineingestopft", sondern kann im gepackten Zustand, d.h. mit enthaltenen Hauptschirm, in den äußeren Container leicht hineingleiten und beim Auslösen herausgleiten. Eine herkömmliche Packung eines Fallschirms ist zum Beispiel quaderförmig oder ähnlich und weicht wesentlich von der hierin beschriebenen Form der Packung des Hauptschirms in Form eines im Wesentlichen länglichen Zylinders mit im Wesentlichen gleichmäßigem, aber beschränktem Durchmesser ab (siehe Fig. 3).

Bei bekannten Rettungsschirmen ist das Verbringen des Rettungsschirms in einen äußeren länglichen Aufbewahrungscontainer problematisch, da eine gleichmäßige Packungsdichte über eine gesamte Länge des länglichen Aufbewahrungscontainers nur schwer zu erreichen ist, so dass beim Auslösen des Rettungsschirms ein sicheres und leichtgängiges Entweichen des Hauptschirms aus dem Aufbewahrungscontainer nicht garantiert werden kann. Ein Verbringen des Hauptschirms und die Packung desselben direkt in dem äußeren Container 235 ist problematisch. Eine gleichmäßige Packdichte des Hauptschirms 220 über die gesamte Länge des äußeren Containers 235 nur schwer zu erreichen, so dass beim Auslösen des Rettungssystems ein sicheres und leichtgängiges Entweichen des Hauptschirms aus dem Container nicht garantiert werden kann. Die Verwendung eines inneren Containers 250, gemäß der vorliegenden Erfindung, löst dieses Problem und sorgt gleichzeitig für eine optimale Raumnutzung des Innenraums des äußeren Containers 235, so dass das Rettungssystem insgesamt eine kompakte Bauart haben kann.

Um die zuvor genannten Formeigenschaften der Packung des Hauptfallschirms mittels des inneren Containers 250 zu erreichen, ist vorteilhaft, dass der innere Container 250 vorzugsweise drei Bereiche umfasst, die nachfolgend im Detail beschrieben werden. Diese Bereiche können überlappen. Die drei Bereiche sind in folgender Abfolge in Längsrichtung des inneren Containers 250 angeordnet: Leinenbereich 203, Reffbereich 205, und Kompressionsbereich 208.

Der innere Container 250 umfasst den Leinenbereich 203, der geeignet ist, eine Mehrzahl der Hauptschirmleinen 228 aufzunehmen. Hierzu umfasst der Leinenbereich 203 vorzugsweise die Leinentaschen 230, die an der Außenseite des inneren Containers 250 angebracht und vernäht sind. In diesen Leinentaschen 230 werden, in gepacktem Zustand des Rettungssystems, Bündel von Abschnitten der Hauptschirmleinen 228 verstaut. Die Leinentaschen 230 sind zumindest an einer Seite geöffnet, um ein oder mehrere Leinen einzuführen.

Wie in Fig. 2 gezeigt, ist der Leinenbereich 203 an einem ersten Ende des Reffbereichs 205 angeordnet und kann optional auch mit dem Reffbereich 205 überlappen.

Der innere Container 250 umfasst ferner den Reffbereich 205 mit einem zweiten Durchmesser, wobei mittels einer Mehrzahl von Schlaufen-Ösen-Paaren 280 der zweite Durchmesser des Reffbereichs im Wesentlichen auf einen Durchmesser gerefft wird, der kleiner ist als der innere Durchmesser des äußeren Containers 235, wenn sich der Hauptschirm 220 innerhalb des inneren Containers 250 befindet, wobei eine Auslöseleine 285 die Schlaufen in den Ösen fixiert und dadurch eine Reffung des ersten Containers aufrechterhält. Eine derartige Auslöseleine wird auch als "Flex Pin" oder Splintleine bezeichnet. Sie ist vorzugsweise aus einem flexiblen, glatten Material gefertigt, zum Beispiel auf Nylondraht.

Die Mehrzahl von Schlaufen-Ösen-Paaren 280 entlang des Reffbereichs 205 ist an der Außenseite des inneren Containers 250 paarweise derart angeordnet, dass eine Schlaufe an eine jeweilige Öse fixierbar ist und ein Durchmesser des inneren Containers 250 im Reffbereich 205 durch Reffung verringert wird. Der Durchmesser des Reffbereichs 205 in gerefftem Zustand ist kleiner ist als der erste Durchmesser des äußeren Containers 235. Der Durchmesser des Reffbereichs 205 in ungerefftem Zustand ist größer als der innere Durchmesser des äußeren Containers 235.

Die Auslöseleine 285 dient zur Fixierung der Mehrzahl von Schlaufen an den jeweiligen Ösen derart, dass ein Entfernen, zum Beispiel ein Herausziehen, der Auslöseleine 285 die Fixierung der Schlaufen-Ösen-Paare löst und der Durchmesser des inneren Containers 250 im Reffbereich 205 durch Entreffung vergrößert wird.

Der innere Container 250 umfasst ferner einen Kompressionsbereich (208, 308) mit einem Durchmesser, der geringer ist als der Durchmesser des Reffbereichs 205 im ungerefften Zustand und der im Wesentlichen dem Durchmesser des Reffbereichs im gerefften Zustand entspricht und geringer ist als der innere Durchmesser des äußeren Containers 235. Der Kompressionsbereich 208 ist an einem Ende des Reffbereichs 205 angeordnet, das gegenüber dem Ende liegt, an dem der Leinenbereich 203 angeordnet ist.

Der innere Container umfasst ferner eine Vorrichtung 290 zum Anbringen eines Hilfsschirms 210, wobei der Kompressionsbereich 208, wie in Fig. 2 gezeigt, zwischen der Vorrichtung 290 zum Anbringen des Hilfsschirms 210 und dem Reffbereich 205 angeordnet ist. Die Vorrichtung 290 zum Anbringen des Hilfsschirms 210 ermöglicht vorzugsweise eine Verbindung mit einer Hilfsschirmleine. Der Hilfsschirm 210 ist in gepacktem Zustand vorzugsweise in einem Hilfsschirmcontainer 292 enthalten. Der Hilfsschirmcontainer 292 kann, wie in Fig. 2 gezeigt, separat von dem äußeren Container 235 sein. Die Abdeckung 236 kann vorzugsweise den äußeren Container 235 und den Hilfsschirmcontainer 292 verschließen.

Die Auslösung des Rettungssystems läuft in folgenden Schritten ab: (a) Ein Notfalldetektionsmodul bestimmt, zum Beispiel durch Auswertung aktueller Sensordaten, dass eine Notfallsituation vorliegt und das Rettungssystem ausgelöst werden soll. (b) Ein Steuersignal öffnet die Abdeckung 236, die zum Beispiel durch eine mechanisch vom äußeren Container 235 abgetrennt oder abgeklappt wird. (c) Der Hilfsschirm 210 wird mittels einer mechanischen Ausschussvorrichtung ausgeschossen; (d) der Hilfsschirm 210 öffnet sich; (e) der Hilfsschirm 210 zieht durch die Hilfsschirmleine 215 den inneren Container 250 aus dem äußeren Container 235; (f) die Auslöseleine 285 wird bei oder kurz nachdem der innere Container 250 aus dem äußeren Container 235 befördert ist gezogen und löst somit die paarweisen Verbindungen zwischen Schlaufen und Ösen 280; (g) der Reffbereich 205 weitet sich durch Entreffung; (h) der Hauptschirm 220 fällt durch die Schwerkraft aus dem inneren Container 250 heraus bzw. es wird der innere Container 250 durch die Verbindung zum Hilfsschirm 210 mittels der Vorrichtung 290 zum Anbringen des Hilfsschirms 210 vom Hauptschirm 220 abgezogen; mit anderen Worten findet das Herausziehen, aus dem äußeren Container 235 und anschließend aus dem inneren Container 250, des Hauptschirms 220 durch die Kraft des Hilfsschirms 210 statt; (i) der Hauptschirm 220 entfaltet sich, gegebenenfalls verzögert aufgrund des optionalen Sliders 242; (j) die Hauptleine 225 des Hauptschirms 220 gerät unter Zug, streckt sich vertikal, löst Sollbruchstellen am Rumpf des Fluggeräts 130 und bringt die Schlaufenkupplung um die Rotorachse unter Zug; (k) Das Fluggerät 130 sinkt gebremst durch den Hauptschirm 220 und den Hilfsschirm 210 zu Boden. In diesem Ablauf können einige aufeinanderfolgende Schritte auch teilweise überlappend ablaufen.

Fig. 3 zeigt den inneren Container 250 für den Hauptschirm 220 in gepacktem Zustand. Die Hauptleine 325 verbindet den Hauptschirm 220 mit dem Fluggerät 130. Die Auslöseleine 385, ist an einem Ende mit der Hauptleine 325 verbunden. Durch Zug auf der Hauptleine 325 wird die Auslöseleine 385 aus den Schlaufen 380 gezogen, so dass sich die Schlaufen von den Ösen lösen und der Reffbereich 305 entrefft wird. Diese Entreffung erleichtert während des Auslösevorgangs das Abstreifen des inneren Containers 350 vom Hauptschirm 220. In Fig. 3 ist der Leinenbereich 303 gezeigt, wobei die gefüllten Leinentaschen von außen zu sehen sind. Im Reffbereich 305 befindet sich typischerweise der vom Stoffvolumen umfangreichere Teil der unteren Kappe des Hauptfallschirms. Durch die Reffung kann der Durchmesser dieses Teils des inneren Containers 350 auf einen Wert reduziert werden, der geringer ist als der innere Durchmesser des äußeren Containers 235. Im Kompressionsbereich 308 sind die restlichen Teile des gefalteten Hauptschirms, insbesondere dessen obere Kappe, verstaut. Ferner ist in Fig. 3 die Vorrichtung 390 zum Anbringen des Hilfsschirms 210 gezeigt. Diese Vorrichtung kann zum Beispiel eine Öse oder Ringkausch sein, die im Stoff des inneren Containers 350 befestigt ist.

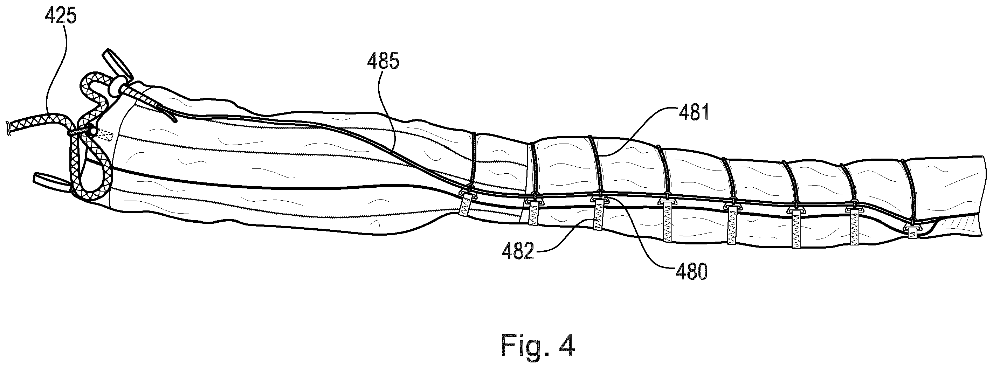

Fig. 4 zeigt ein Detail des inneren Containers 250 für den Hauptschirm 220 in gepacktem Zustand, sowie die Hauptleine 425 des Hauptschirms 220, die Auslöseeine 485 und die Kombination 480 von Öse und Schlaufe in verbundenen Zustand. An der Außenseite des inneren Container 250 sind die vernähten Schlaufen 481 gezeigt, wobei ferner die paarweise zu den Schlaufen an der Außenseite des inneren Container 250 vernähten Ösen 482 zu erkennen sind.

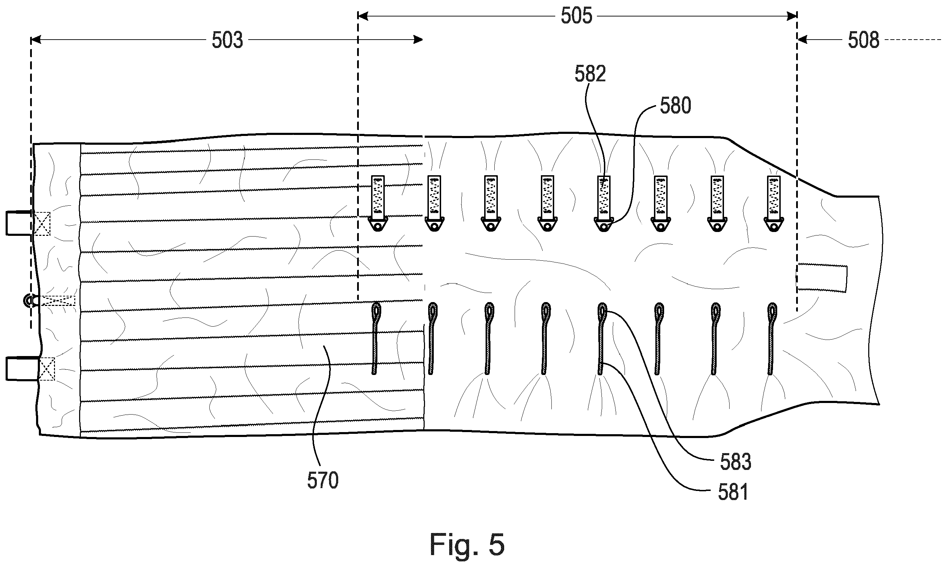

Fig. 5 zeigt den gleichen Abschnitt des inneren Containers 250 wie Fig. 4, jedoch im geöffneten, d.h. nicht-gepacktem Zustand. In der Fig. 5 ist deutlich erkennbar, dass der Durchmesser des Reffbereichs 505 im ungerefften Zustand deutlich größer ist als der Durchmesser des Kompressionsbereichs 508. Es ist ferner erkennbar, dass der Reffbereich 505 teilweise mit dem Leinenbereich 503 überlappt. Die Ösen 580 sind mit einem an der Außenseite des inneren Containers 250 vernähten Stoffband 582 befestigt. Gegenüberlegend befindet sich jeweils paarweise zu den Ösen, eine Schlaufe 583, die in ihrer Fortsetzung 581 ebenfalls an der Außenseite des inneren Containers 250 vernäht ist.

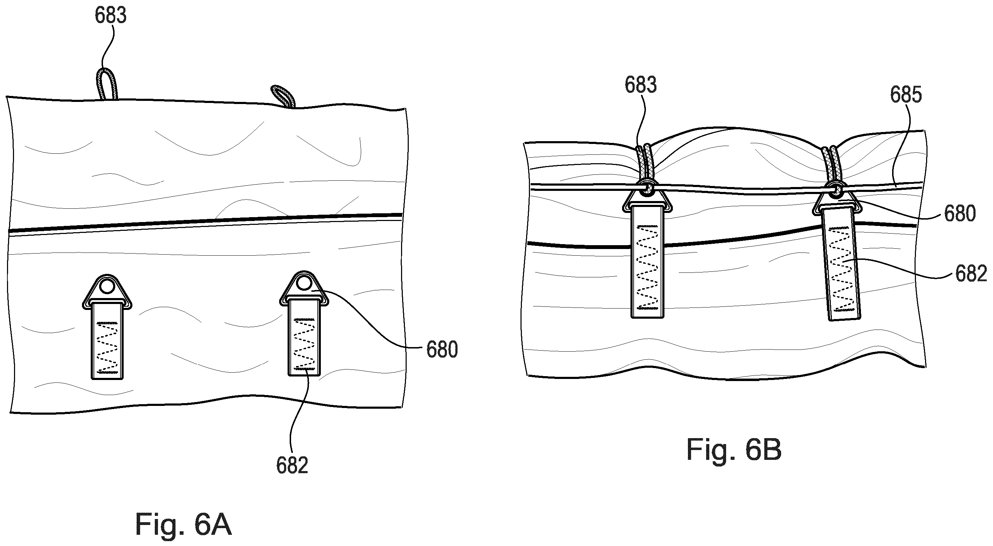

Fig. 6A zeigt ein Detail der Öse 680, des vernähten Stoffbands 682 und der entsprechenden Schlaufe 683 im ungerefften Zustand des Reffbereichs.

Fig. 6B zeigt ein Detail der Öse 680, des vernähten Stoffbands 682 und der entsprechenden Schlaufe 683 im gerefften Zustand des Reffbereichs. Zu sehen ist, dass die Schlaufe 683 durch die Öse 680 geführt ist, und die Auslöseleine 685 jeweils durch das jenseits der Durchführung durch die Öse 683 herausragende Ende der Schlaufe 683 geführt ist. Die Schlaufe wird somit an der Öse gehalten, was eine Reffung des mit dem gefalteten Hauptschirm 220 gefüllten inneren Containers 250 aufrechterhält. Ein Herausziehen der Auslöseleine 685 löst diese paarweise Verbindung zwischen gegenüberliegender Öse und Schlaufe und führt zur Entreffung.

## Patentansprüche

1. Rettungssystem für ein Fluggerät (130), das ein Drehflügler ist, umfassend:
einen Hauptschirm (120) mit einer Hauptleine (125) und einer Mehrzahl von Hauptschirmleinen (128), wobei die Hauptleine (125) dazu ausgelegt ist, den Hauptschirm mit dem Fluggerät (130) zu verbinden, an dem das Rettungssystem installiert ist;
einen äußeren Container (135, 235) mit einem ersten Durchmesser, der dazu ausgelegt ist, an einer Außenseite längs entlang eines Heckauslegers des Fluggerätes (130) angeordnet zu sein;
einen inneren Container (250), der in dem äußeren Container (135, 235) entfernbar angeordnet ist und geeignet ist den Hauptschirm (120) aufzunehmen;
wobei das Rettungssystem **dadurch gekennzeichnet ist, dass** der innere Container (250) aus leichtem, gleitfähigem Textilstoff gefertigt ist.

2. Rettungssystem nach Anspruch 1, wobei die Hauptleine (125) dazu ausgelegt ist, mittels eines Verbindungssystems mit einer Rotorachse des Drehflüglers verbunden zu sein, so dass in einem aufgefalteten Zustand des Hauptschirms (120), die Hauptleine (125) des Hauptschirms (120) im Wesentlichen in der Nähe des Schwerpunktes des Drehflüglers drehbar befestigt ist.

3. Rettungssystem nach Anspruch 1 oder 2, wobei der innere Container (250), ferner Folgendes umfasst:
einen Reffbereich (205, 305) mit einem zweiten Durchmesser, wobei mittels einer Mehrzahl von Schlaufen-Ösen-Paaren (280) der zweite Durchmesser des Reffbereichs im Wesentlichen auf einen Durchmesser gerefft wird, der kleiner ist als der erste Durchmesser des äußeren Containers (135, 235), wenn sich der Hauptschirm innerhalb des inneren Containers (250) befindet, wobei eine Auslöseleine (285) die Schlaufen in den Ösen fixiert und dadurch eine Reffung des inneren Containers (250) aufrechterhält;
einen Leinenbereich (203), wobei der Leinenbereich an einem ersten Ende des Reffbereichs angeordnet ist und geeignet ist die Mehrzahl der Hauptschirmleinen (128) aufzunehmen;
einen Kompressionsbereich (208, 308) mit einem dritten Durchmesser, wobei der dritte Durchmesser geringer ist als der zweite Durchmesser und im Wesentlichen dem gerefften Durchmesser des Reffbereichs entspricht und wobei der Kompressionsbereich (208, 308) an einem zweiten Ende des Reffbereichs (205, 305) angeordnet ist;
eine Vorrichtung (290, 390) zum Anbringen eines Hilfsschirms (110, 210), wobei der Kompressionsbereich (208, 308) zwischen der Vorrichtung (290, 390) zum Anbringen des Hilfsschirms und dem Reffbereich (205, 305) angeordnet ist.

4. Rettungssystem nach Anspruch 3, wobei das Rettungssystem einen Hilfsschirm aufweist, der mittels der Vorrichtung zum Anbringen des Hilfsschirms mit dem inneren Container verbunden ist.

5. Rettungssystem nach Anspruch 3, wobei die Hauptleine mit der Auslöseleine (285) derart verbunden ist, dass die Auslöseleine (285) aus den Schlaufen-Ösen-Paaren gezogen wird, wenn der innere Container durch den Hilfsschirm vollständig aus dem äußeren Container gezogen wurde.

6. Rettungssystem nach Anspruch 4 oder 5, wobei der Hilfsschirm (110) mittels eines mechanischen Ausschusses ausgeschossen wird.

7. Rettungssystem nach einem der vorhergehenden Ansprüche, wobei das Rettungssystem ein Notfalldetektionsmodul aufweist.

8. Rettungssystem nach einem der Ansprüche 3-7, wobei der Leinenbereich (203) eine Mehrzahl von Taschen (570) aufweist, die geeignet sind, die Hauptschirmleinen (128) aufzunehmen.

9. Rettungssystem nach einem der vorhergehenden Ansprüche, wobei der äußere Container (135) eine Schutzkappe (136) aufweist, die in einem detektierten Notfall mechanisch von dem äußeren Container (135) abgesprengt wird.

## Claims

1. A rescue system for an aircraft (130) that is a rotorcraft, comprising:
a main parachute (120) having a main line (125) and a plurality of main parachute lines (128), the main line (125) being adapted to connect the main parachute to the aircraft (130) on which the rescue system is installed;
an outer container (135, 235) having a first diameter adapted to be disposed on an outer side longitudinally along a tail boom of the aircraft (130);
an inner container (250) removably disposed in the outer container (135, 235) and suitable for receiving the main parachute (120);
the rescue system being **characterized in that** the inner container (250) is made of lightweight, slidable textile fabric.

2. The rescue system of claim 1, wherein the main line (125) is adapted to be connected to a rotor axle of the rotorcraft by means of a connection system such that, in an unfolded state of the main parachute (120), the main line (125) of the main parachute (120) is rotatably secured substantially near the center of gravity of the rotorcraft.

3. The rescue system of claim 1 or 2, wherein the inner container (250) further comprises:
a reefing portion (205, 305) having a second diameter, wherein, by means of a plurality of loop-eye pairs (280), the second diameter of the reefing portion is reefed substantially to a diameter that is smaller than the first diameter of the outer container (135, 235) when the main parachute is within the inner container (250), wherein a release line (285) fixes the loops in the eyes and thereby maintains reefing of the inner container (250);
a line portion (203), the line portion being disposed at a first end of the reefing portion and suitable for receiving the plurality of main parachute lines (128);
a compression portion (208, 308) having a third diameter, wherein the third diameter is less than the second diameter and substantially corresponds to the reefed diameter of the reefing portion, and wherein the compression portion (208, 308) is disposed at a second end of the reefing portion (205, 305);
an apparatus (290, 390) for attaching an auxiliary parachute (110, 210), wherein the compression portion (208, 308) is disposed between the apparatus (290, 390) for attaching the auxiliary parachute and the reefing portion (205, 305).

4. The rescue system of claim 3, wherein the rescue system has an auxiliary parachute connected to the inner container by means of the apparatus for attaching the auxiliary parachute.

5. The rescue system of claim 3, wherein the main line is connected to the release line (285) such that the release line (285) is pulled out of the loop-eye pairs when the inner container has been pulled completely out of the outer container by the auxiliary parachute.

6. The rescue system of claim 4 or 5, wherein the auxiliary parachute (110) is ejected by means of a mechanical ejector.

7. The rescue system of any one of the preceding claims, wherein the rescue system has an emergency detection module.

8. The rescue system of any one of claims 3-7, wherein the line portion (203) has a plurality of pockets (570) suitable for receiving the main parachute lines (128).

9. The rescue system of any one of the preceding claims, wherein the outer container (135) has a protective cap (136) which is mechanically blasted away from the outer container (135) in a detected emergency.

## Revendications

1. Système de sauvetage pour un aéronef (130) qui est un aéronef à voilure tournante, comprenant :
un parachute principal (120) ayant une corde principale (125) et une pluralité de cordes de parachute principal (128), la corde principale (125) étant conçue pour relier le parachute principal à l'aéronef (130) sur lequel le système de sauvetage est installé ;
un conteneur externe (135, 235) ayant un premier diamètre, adapté pour être agencé sur un côté externe le long d'un bras arrière de l'aéronef (130) ;
un conteneur interne (250) agencé de manière amovible dans le conteneur externe (135, 235) et adapté pour recevoir le parachute principal (120) ;
le système de sauvetage étant **caractérisé en ce que** le conteneur interne (250) est fabriqué à partir d'un tissu textile léger et glissant.

2. Système de sauvetage selon la revendication 1, dans lequel la corde principale (125) est conçue pour être reliée à un axe de rotor de l'aéronef à voilure tournante au moyen d'un système de connexion, de sorte que, lorsque le parachute principal (120) est déployé, la corde principale (125) du parachute principal (120) soit fixée de manière pivotante sensiblement à proximité du centre de gravité de l'aéronef à voilure tournante.

3. Système de sauvetage selon la revendication 1 ou la revendication 2, dans lequel le conteneur interne (250) comprend en outre :
une zone de repliement (205, 305) ayant un deuxième diamètre, dans laquelle, au moyen d'une pluralité de paires de boucles et d'œillets (280), le deuxième diamètre de la zone de repliement est réduit à un diamètre sensiblement inférieur au premier diamètre du conteneur externe (135, 235) lorsque la voile principale se trouve à l'intérieur du conteneur interne (250), une corde de déclenchement (285) fixant les boucles dans les œillets et maintenant ainsi le repliement du conteneur interne (250) ;
une zone de cordes (203), la zone de cordes étant agencée à une première extrémité de la zone de repliement et étant adaptée pour recevoir la pluralité de cordes de la voile principale (128) ;
une zone de compression (208, 308) ayant un troisième diamètre, le troisième diamètre étant inférieur au deuxième diamètre et correspondant sensiblement au diamètre de repliage de la zone de repliement, la zone de compression (208, 308) étant agencée à une deuxième extrémité de la zone de repliement (205, 305) ;
un dispositif (290, 390) pour fixer un parachute auxiliaire (110, 210), la zone de compression (208, 308) étant agencée entre le dispositif (290, 390) pour fixer le parachute auxiliaire et la zone de repliement (205, 305).

4. Système de sauvetage selon la revendication 3, comprenant un parachute auxiliaire qui est relié au conteneur interne au moyen du dispositif de fixation du parachute auxiliaire.

5. Système de sauvetage selon la revendication 3, dans lequel la corde principale est reliée à la corde de déclenchement (285) de telle sorte que la corde de déclenchement (285) soit extraite des paires de boucles et d'œillets lorsque le conteneur interne a été complètement retiré du conteneur externe par le parachute auxiliaire.

6. Système de sauvetage selon la revendication 4 ou la revendication 5, dans lequel le parachute auxiliaire (110) est éjecté au moyen d'un dispositif d'éjection mécanique.

7. Système de sauvetage selon l'une des revendications précédentes, le système de sauvetage présentant un module de détection d'urgence.

8. Système de sauvetage selon l'une des revendications 3 à 7, dans lequel la zone de cordes (203) présente une pluralité de poches (570) adaptées pour recevoir les cordes (128) du parachute principal.

9. Système de sauvetage selon l'une des revendications précédentes, dans lequel le conteneur externe (135) comprend un capuchon de protection (136) qui est éjecté mécaniquement du conteneur externe (135) en cas d'urgence détectée.
